# EUROPEAN PATENT APPLICATION

(11) **EP 4 837 778 A1**
(43) Date of publication of application: **11.11.2026**
(21) Application number: 25174843.0
(22) Date of filing: 07.05.2025
(51) Int. Cl.: B60L 53/62, B60L 53/63, B60L 53/66

(54) **MONITORING OF AT LEAST ONE EV CHARGER**

(71) Applicant: Siemens Aktiengesellschaft, 80333 München (DE)
(72) Inventor: Sprenger, Felix, 91056 Erlangen (DE); Viswanathan, Kapaleeswaran, 560076 Bangalore (IN)
(74) Representative: Siemens Patent Attorneys

(57) **Abstract**

The invention relates to a system and a computer-implemented method for monitoring electric vehicle (EV) chargers. The system and the computer-implemented method are specifically tailored to the operational context of EV chargers and are designed to address both physical and cyber-related challenges. The system comprises an input interface (II), an output interface (OI), a processor, and a memory connected to the processor. The memory is configured to carry one or more components executable by the processor. One component the memory comprises is the Event Analyzer Component (EAC). The input interface collects EV charger-specific events, while the Event Analyzer Component (EAC) applies a set of predefined rules to the EV charger-specific events to determine whether one or more EV charger-specific events cause an EV charger-specific incident. The set of predefined rules can be updated using external EV charger-related information collected and provided by an Information Collector Component (ICC) as well as supplemented and/or modified with customized rules collected and provided by an Event Designer Component (EDC). The Information Collector Component (ICC) and Event Designer Component (EDC) are components that the memory can comprise. When an EV charger-specific incident is inferred, the Event Analyzer Component (EAC) sends the EV charger-specific incident to the output interface (OI) to request an incident-specific response. Additionally, the memory can comprise an Incident Report Generator Component (IRGC) and a Charger Trust Report Generator Component (CTRGC). The system can generate reports on EV charger-specific incidents through the Incident Report Generator Component (IRGC) and calculate EV charger-specific trust scores using the Charger Trust Report Generator Component (CTRGC).

## Description

The present disclosure relates generally to electric vehicle (EV) chargers, and more particularly to a system for monitoring at least one EV charger, as well as a computer-implemented method for monitoring at least one EV charger.

With the growing adoption of electric vehicles worldwide, EV chargers have become a critical component of the modern transportation infrastructure. However, the widespread deployment of EV chargers in remote and often unmonitored locations - such as parking lots, highways, and public spaces - poses significant security challenges. Ensuring the operational security, reliability and availability of EV chargers requires robust monitoring solutions capable of quickly detecting EV charger-specific incidents and thus enabling incident-specific responses.

The cyber security is a critical aspect of EV charger monitoring, encompassing issues such as unauthorized modifications to configurations and firmware as well as unauthorized communications between the chargers and machines or human operators. Existing solutions, such as Security Incident and Event Monitoring (SIEM) systems, provide tools for monitoring cybersecurity in IT environments. However, these systems are primarily designed for conventional IT infrastructure and lack the specialization needed to address the unique requirements of the security of EV chargers. Unlike traditional IT systems, EV chargers face a broader range of cybersecurity threats, for example, due to their connection to the distribution grid and their involvement in financial transactions governed by regulatory frameworks.

In addition to cyber threats, EV chargers face distinctive challenges related to physical security, such as vandalism and unauthorized physical access. These vulnerabilities are further exacerbated by their widespread deployment in locations that are not continuously monitored. Therefore, it is imperative to develop monitoring solutions that extend beyond conventional cybersecurity approaches to include physical security measures specifically tailored to the operational context of EV chargers.

It is an object of the present invention to improve the monitoring of at least one EV charger, addressing cyber as well as physical threats.

According to the invention, the object is solved by a system with the features of the independent claim 1.

A system for monitoring at least one EV charger according to the invention comprises an input interface, an output interface, a processor and a memory connected to the processor, wherein the memory is configured to carry one or more components executable by the processor, wherein the processor is configured to execute the one or more components provided on the memory. The input interface is configured to receive and collect EV charger-specific events. The memory comprises an Event Analyzer Component, wherein the Event Analyzer Component is configured to:
- receive the EV charger-specific events from the input interface,
- apply a set of predefined rules to the EV charger-specific events to infer if one or more EV charger-specific events cause at least one EV charger-specific incident,
- send the at least one inferred EV charger-specific incident to the output interface for requesting an incident-specific response.

An EV charger-specific event refers to at least one physical and/or digital change in the state of the EV charger, or a time series that encompasses at least one such physical and/or digital change. The set of predefined rules may include specific parameters, thresholds and/or combinations (and correlations) of EV charger-specific events that result in at least one EV charger-specific incident. For example, an EV charger-specific event such as "door open" alone does not automatically trigger an EV charger-specific incident. However, if the "door open" EV charger-specific event occurs simultaneously with another EV charger-specific event, such as "modifications to electrical wiring," the Event Analyzer Component will infer an EV charger-specific incident and forward it to the output interface, as specified in the set of predefined rules. Conversely, the predefined rules may also specify that if a maintenance appointment is scheduled for the EV charger, and during this time both the "door open" and "modifications to electrical wiring" EV charger-specific events occur, the Event Analyzer Component will not infer an EV charger-specific incident, as these EV charger-specific events are considered authorized. This offers the advantage of minimizing false positive EV charger-specific incidents and ensuring that only critical EV charger-specific incidents are forwarded, triggering an incident-specific response. The purpose of the incident-specific response is to restore the EV charger to an incident-free state. If restoration is not possible, the response may involve disconnecting the EV charger to prevent further damage or harm.

EV charger-specific incidents, within the meaning of the invention, may relate to a security aspect of the EV charger but can also concern its availability and reliability.

Advantageous embodiments of the invention are presented in the dependent claims.

In an embodiment of the invention, the inferred EV charger-specific incident relates to at least one physical and/or digital change of the state of the at least one EV charger.

Hence, the system for monitoring at least one EV charger provides the advantage of meeting the specific security requirements associated with an EV charger in terms of both cyber security threats and physical security threats and their combination by monitoring EV charger-specific events related to at least one digital change, as well as monitoring EV charger-specific events related to at least one physical change.

By addressing both types of EV charger-specific events, as well as their combination, the system meets the specific challenges associated with EV chargers.

In a further embodiment of the invention, the memory comprises at least one Information Collector Component, wherein the Information Collector Component is configured to collect and pre-process external EV charger-relevant information from at least one external database. The in particular pre-processed external EV charger-relevant information is forwarded to the Event Analyzer Component. And the Event Analyzer Component is configured to update the set of predefined rules based on the external EV charger-relevant information.

This offers the advantage that the system can integrate external EV charger-relevant information from various external databases to update the set of predefined rules.

In a further embodiment of the invention, the at least one external database comprises third-party security information.

This provides the advantage of incorporating external and broader knowledge about software or hardware vulnerabilities related to EV chargers into the system, enabling updates to the set of predefined rules. For instance, in the case of a large-scale hacker attack targeting EV chargers, the Information Collector Component can retrieve this information from the external database and forward it to the Event Analyzer Component. The Event Analyzer Component can then use this information to update the set of predefined rules, allowing for a more sensitive and context-aware inference of EV charger-specific incidents.

In a further embodiment of the invention, the at least one external database comprises information from the manufacturer of the EV charger.

This offers the advantage that external knowledge from the EV charger manufacturer, tailored to the monitored EV charger - such as information about upcoming firmware updates - can be incorporated into the system. For instance, without the information about a scheduled firmware update, any EV charger-specific event indicating a potential tampering with the firmware would trigger the inference of an EV charger-specific incident. However, in the combination with the information about an authorized firmware update, the system can contextualize the EV charger-specific event, recognizing the firmware change as legitimate, and no EV charger-specific incident will be inferred.

In a further embodiment of the invention, the memory comprises an Event Designer Component, wherein the Event Designer Component is configured to receive a user input, wherein the user input defines one or more customized rules. And the Event Analyzer Component is configured to apply the one or more customized rules to the EV charger-specific events to infer if one or more EV charger-specific events cause at least one EV charger-specific incident.

This offers the advantage that a user, such as a Charge Station Operator, can tailor customized rules to address the specific needs and characteristics of their own EV charger inventory.

In a further embodiment of the invention, the one or more customized rules comprise customized parameters and/or thresholds applied to the parameters of the predefined set of rules to infer whether one or more EV charger-specific events cause at least one EV charger-specific incident. Additionally, or alternatively, the customized rules may include specific combinations (or correlations) of certain EV charger-specific events that lead to the inference of an EV charger-specific incident. These various options for customized rules offer the advantage of precise and straightforward tailoring to the specific operating conditions of the EV charger.

In a further embodiment of the invention, the memory comprises an Incident Report Generator Component, wherein the Incident Report Generator Component is configured to:
- receive the at least one inferred EV charger-specific incident from the Event Analyzer Component,
- summarize and organize the at least one EV charger-specific incident,
- generate an EV charger-specific report in a suitable format,
- send the EV charger-specific report to the output interface for a visualization of the EV charger-specific incidents.

This provides the advantage that EV charger-specific incidents can be clearly presented and visualized, making them easier to understand for users such as Charge Station Operators.

In a further embodiment of the invention, the memory comprises a Charger Trust Report Generator Component, wherein the Charger Trust Report Generator Component is configured to:
- receive the at least one inferred EV charger-specific incident from the Event Analyzer Component,
- generate an EV Charger-specific trust score based on EV charger-specific incidents,
- send the respective EV charger-specific trust score to the output interface.

For the calculation of the EV charger-specific trust score, all recorded EV charger-specific incidents within a given time period are taken into account. This includes EV charger-specific incidents related to the security of the EV charger, as well as those concerning its reliability and availability. Hence, the trust score provides a straightforward metric for evaluating the security, reliability and availability of a specific EV charger. Furthermore, the sent EV charger-specific trust score can trigger a trust score-specific response request.

In a further embodiment of the invention, the EV charger-specific trust score increases if no EV charger-specific incidents occur within a predefined time period and decreases if a certain number of EV charger-specific incidents occurs within a predefined time period.

This offers the advantage that an EV charger-specific trust score can be easily derived from the inferred EV charger-specific incidents.

The object of the present disclosure is further achieved by a corresponding computer-implemented method with the features of the independent claim 11.

According to the invention the computer-implemented method for monitoring at least one EV charger, comprising steps of:
- receiving and collecting EV charger-specific events by an input interface of a computing system, wherein
   ∘ the computing system further comprises a processor and a memory connected to the processor, wherein the memory is configured to carry one or more components executable by the processor, wherein the processor is configured to execute the one or more components provided on the memory, wherein the memory comprises an Event Analyzer Component, wherein
- the Event Analyzer Component
   ∘ receives EV charger-specific events from the input interface,
   ∘ applies a set of predefined rules to the EV charger-specific events to infer if the EV charger-specific events cause at least one EV charger-specific incident,
   ∘ sends the at least one inferred EV charger-specific incident to the output interface for requesting an incident-specific response.

The corresponding computer-implemented method offers the same advantages.

All embodiments, whether dependent on claim 1 or 11, or referring solely to individual features or combinations of features of the claims, particularly the reference of dependent claims to the independent claim 11, result in an improvement of the monitoring of at least one EV charger.

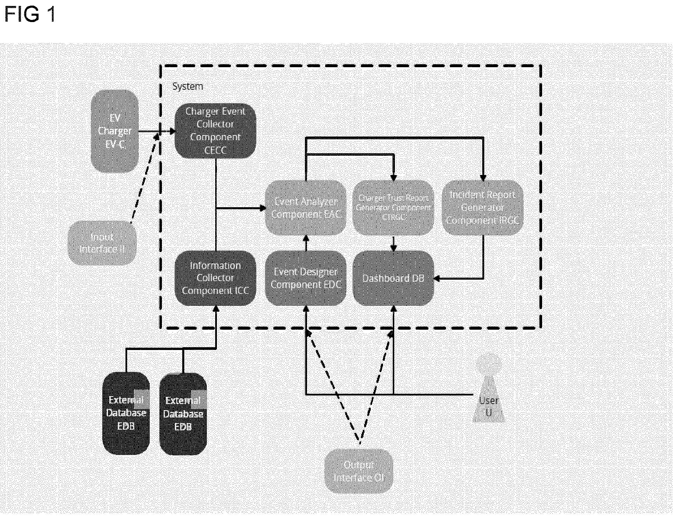

The characteristics, features and advantages of this invention described above, as well as the manner in which these are achieved, will be more clearly and fully understood in connection with the following description of an exemplary embodiment which will be explained in more detail in connection with the drawing, wherein
figure 1 shows a schematic view of an embodiment of a system for monitoring at least one EV charger according to the invention.

Figure 1 (FIG 1) shows an embodiment of a system for monitoring of at least one EV charger (EV-C) according to the invention.

The system comprises an input interface (II), an output interface (OI), a processor and a memory connected to the processor. The memory and the processor are not shown in figure 1.

The input interface (II) is configured to receive and collect EV charger-specific events from the at least on EV charger (EV-C). In the embodiment depicted in figure 1 the input interface (II) comprises a Charge Event Collector Component (CECC). The Charge Event Collector Component (CECC) is a software component that ensures the EV charger-specific events received and collected by the input interface (II) are properly formatted and sorted.

The memory is connected to the processor, wherein the memory is configured to carry one or more components executable by the processor, wherein the processor is configured to execute the one or more components provided on the memory. In the embodiment illustrated in figure 1 the memory comprises an Event Analyzer Component (EAC), an Information Collector Components (ICC), an Event Designer Component (EDC), an Incident Report Generator Component (IRGC) and a Charger Trust Report Generator Component (CTRGC).

The Information Collector Component (ICC) is configured to collect and preprocess external EV charger-relevant information from at least one external database (EDB). In the embodiment shown in figure 1, the Information Collector Component (ICC) collects and preprocesses information from a first external database (EDB) and a second external database (EDB). For example, the first external database (EDB) may be the National Vulnerability Database from the National Institute of Standards and Technology. The National Vulnerability Database contains third-party security information regarding software and hardware vulnerabilities that could pose a risk to the security of the at least on monitored EV charger. The second external database (EDB) shown in figure 1 may be provided by the manufacturer of the EV charger and include information such as firmware vulnerabilities and upcoming firmware updates.

In another embodiment, a different number external databases (EDB) is possible.

The Event Designer Component (EDC) is configured to receive user input, wherein the user input defines one or more customized rules. A customized rule can comprise one or more tailored parameters and/or thresholds applied to the parameters of the predefined set of rules to infer whether one or more EV charger-specific events cause at least one EV charger-specific incident. For example, a customized rule could be created for an EV charger located in a region with extreme weather conditions. The user could define a customized rule such as: "If the ambient temperature drops below -20°C or exceeds 50°C, and simultaneously the internal charger temperature is outside the safe range of 10°C to 80°C, an EV charger specific-incident is inferred." This rule addresses the specific needs of chargers in harsh climates, where predefined rules and/or thresholds may not suffice. Additionally, or alternatively, a customized rule can comprise a unique combination (or correlation) of EV charger-specific events that collectively cause the inference of an EV charger-specific incident. For example, in a high-traffic urban environment, the user might define a rule: "If three or more EVs are connected to the specific EV charger within 10 minutes, and the grid voltage simultaneously drops by more than 10 % of its normal value, an EV charger-specific incident is inferred to signal potential overloading." This customized rule is tailored to the specific conditions of a busy urban charging station and combines multiple EV charger-specific events to infer EV charger-specific incidents that might not arise in other locations.

The Event Analyzer Component (EAC) is configured to receive EV charger-specific events from the input interface (II) or as it is depicted in figure 1 from the Charge Event Collector Component (CECC). An EV charger-specific event refers to at least one physical and/or digital change in the state of the EV charger, or a time series that encompasses at least one such physical and/or digital change. An EV charger-specific event related to a digital change may involve modifications to data ports, configuration files, or firmware. On the other hand, an EV charger-specific event related to a physical change could include actions such as opening or closing of a door, power supply disruptions or surges, disconnection of output cables, modifications to electrical and data wiring, or hardware replacements.

Furthermore, the Event Analyzer Component (EAC) is configured to apply a set of predefined rules to the EV charger-specific events to infer whether one or more EV charger-specific events cause at least one EV charger-specific incident. The set of predefined rules can be updated using the external EV charger-related information provided by the Information Collector Component (ICC). Additionally, the set of predefined rules can be supplemented and/or modified by the customized rules provided by the Event Designer Component (EDC).

An inferred EV charger-specific incident may relate to the security, availability, or reliability of the EV charger. For example:
- Security: A potential EV charger-specific incident might be inferred if the following rule is triggered: "An EV charger-specific event indicates tampering with the firmware, and simultaneously the newest security patch has not yet been applied." This scenario highlights a potential vulnerability in the EV charger's security.
- Availability: In the context of network connectivity, an EV charger-specific incident could be inferred if the following rule is triggered: "An EV charger-specific event encompasses an interruption of a heartbeat signal, which is expected to be sent at regular intervals via the 4G mobile network connection." This scenario points to a potential issue with the charger's availability due to network disruptions.
- Reliability: An example of an EV charger-specific incident related to reliability could occur if the EV charger-specific event " cut-off charging cable" is detected. In this case, the predefined rule might state that this EV charger-specific event alone is sufficient to infer an EV charger-specific incident. This scenario reflects a direct impact on the operational reliability of the charger.

After the inferring of at least on EV charger-specific incident, the Event Analyzer Component (EAC) is configured to send the at least one inferred EV charger-specific incident to the output interface (OI) for requesting an incident-specific response.

The Incident Report Generator Component (IRGC), as illustrated in the embodiment shown in Figure 1, is configured to receive at least one inferred EV charger-specific security incident from the Event Analyzer Component (EAC), summarize and organize it, and generate an EV charger-specific report in a suitable format. Subsequently, as depicted in figure 1, the Incident Report Generator Component (IRGC) sends the EV charger-specific report to a dashboard (DB) for visualization of the incidents. The dashboard (DB) can, for example, be implemented as part of a website or a mobile application to provide a clear overview for a user (U), such as a Charge Station Operator. In other embodiments, a dashboard (DB) may not be required, and the Incident Report Generator Component (IRGC) can send the EV charger-specific report to another output interface (OI).

The Charger Trust Report Generator Component (CTRGC), as depicted in figure 1, is configured to receive the at least one inferred EV charger-specific incident from the Event Analyzer Component (EAC). Furthermore, the Charger Trust Report Generator Component (CTRGC) is designed to generate an EV charger-specific trust score based on EV charger-specific incidents. For the calculation of the EV charger-specific trust score, all recorded EV charger-specific incidents within a given time period are taken into account. This includes EV charger-specific incidents related to the security of the EV charger, as well as those concerning its reliability and availability. In one embodiment of the invention, the EV charger-specific trust score increases if no EV charger-specific incidents occur within a predefined time period. Conversely, the trust score decreases if a certain number of EV charger-specific incidents occur within the same predefined time period. Additionally, the calculation of the EV charger-specific trust score may also take into account a weighting of the EV charger-specific incidents occurring within the predefined time period.

In one embodiment of the invention, the EV charger-specific trust score may also serve as a tool or an indicator for the predictive maintenance of the specific EV charger.

Although the invention has been illustrated and described in detail by one embodiment, the invention is not limited by the examples disclosed and other variations may be derived therefrom by those skilled in the art without departing from the scope of the invention.

Independent of the grammatical term usage, individuals with male, female or other gender identities are included within the term.

## Claims

1. System for monitoring at least one EV charger (EV-C), wherein the system comprises an input interface (II), an output interface (OI), a processor and a memory connected to the processor, wherein the memory is configured to carry one or more components executable by the processor, wherein the processor is configured to execute the one or more components provided on the memory, wherein:
the input interface (II) is configured to receive and collect EV charger-specific events from the at least one EV charger (EV-C),
the memory comprises
an Event Analyzer Component (EAC),
wherein the Event Analyzer Component (EAC) is configured to:
- receive EV charger-specific events from the input interface (II),
- apply a set of predefined rules to the EV charger-specific events to infer if one or more EV charger-specific events cause at least one EV charger-specific incident,
- send the at least one inferred EV charger-specific incident to the output interface (OI) for requesting an incident-specific response.

2. System according to claim 1,
wherein the at least one EV charger-specific incident relates to at least one physical and/or digital change of the state of the at least one EV charger (EV-C).

3. System according to claim 1 or 2,
wherein the memory comprises an Information Collector Component (ICC),
wherein the Information Collector Component (ICC) is configured to collect external EV charger-relevant information from at least one external database (EDB) and forward the external EV charger-relevant information to the Event Analyzer Component (EAC), and the Event Analyzer Component (EAC) is configured to update the set of predefined rules based on the external EV charger-relevant information.

4. System according to claim 3,
wherein the at least one external database (EDB) comprises third-party security information.

5. System according to claim 3 or 4,
wherein the at least one external database (EDB) comprises information from the manufacturer of the EV charger.

6. System according to any of the preceding claims,
wherein the memory comprises an Event Designer Component (EDC),
wherein the Event Designer Component (EDC) is configured to receive a user input, wherein the user input defines one or more customized rules, and the Event Analyzer Component (EAC) is configured to apply the one or more customized rules to the EV charger-specific events to infer if one or more EV charger-specific events cause at least one EV charger-specific incident.

7. System according to claim 6,
wherein the one or more customized rules comprise customized parameters to infer if the EV charger-specific events cause at least one EV charger-specific incident and/or customized combination of certain EV charger-specific events that lead to the inferring of an EV charger-specific incident.

8. System according to any of the preceding claims,
wherein the memory comprises an Incident Report Generator Component (IRGC),
wherein the Incident Report Generator Component (IRGC) is configured to:
- receive the at least one inferred EV charger-specific incident from the Event Analyzer Component (EAC),
- summarize and organize the at least one EV charger-specific incident,
- generate an EV charger-specific report in a suitable format,
- send the EV charger-specific report to the output interface for a visualization of the EV charger-specific incidents.

9. System according to any of the preceding claims,
wherein the memory comprises a Charger Trust Report Generator Component (CTRGC),
wherein the Charger Trust Report Generator Component (CTRGC) is configured to:
- receive the at least one inferred EV charger-specific incident from the Event Analyzer Component (EAC),
- generate an EV charger-specific trust score based on EV charger-specific incidents,
- send the respective EV charger-specific trust score to the output interface (OI).

10. System according to claim 9,
wherein the EV charger-specific trust score increases if no EV charger-specific incidents occur within a predefined time period and decreases if a certain number of EV charger-specific incidents occurs within a predefined time period.

11. Computer-implemented method for monitoring at least one EV charger (EV-C), comprising steps of:
- receiving and collecting EV charger-specific events by an input interface (II) of a computing system, wherein
∘ the computing system further comprises a processor and a memory connected to the processor, wherein the memory is configured to carry one or more components executable by the processor, wherein the processor is configured to execute the one or more components provided on the memory, wherein the memory comprises an Event Analyzer Component (EAC), wherein
- the Event Analyzer Component (EAC)
∘ receives EV charger-specific events from the input interface (II),
∘ applies a set of predefined rules to the EV charger-specific events to infer if the EV charger-specific events cause at least one EV charger-specific incident,
∘ sends the at least one inferred EV charger-specific incident to the output interface (OI) for requesting an incident-specific response.
